# EUROPEAN PATENT SPECIFICATION

(11) **EP 1 866 259 B1**
(45) Date of publication and mention of the grant of the patent: **30.01.2013**
(21) Application number: 06731128.2
(22) Date of filing: 29.03.2006
(51) Int. Cl.: C08F 290/06, C04B 40/00, C08F 290/00, C08L 33/14, C08L 53/00, C04B 24/26

(54) **CEMENT ADMIXTURE**
ZEMENTZUSATZMITTEL
ADJUVANT POUR CIMENTS

(30) Priority: 30.03.2005 JP 2005100055
(43) Date of publication of application: 19.12.2007
(73) Proprietor: Nippon Shokubai Co.,Ltd., Osaka-shi, Osaka 541-0043 (JP)
(72) Inventor: YAMAZAKI, Hiroshi, 5640024 (JP); HIRATA, Tsuyoshi, 6550004 (JP); YAMASHITA, Akihiko, 5670833 (JP)
(74) Representative: Orton, Erica Louise
(86) International application number: PCT/JP2006/307180
(87) International publication number: WO 2006/107069

(56) References cited:
- EP-A1- 0 556 061
- EP-A1- 0 560 602
- JP-A- 05 306 152
- JP-A- 09 286 647
- JP-A- 10 287 458
- JP-A- 2000 191 355
- JP-A- 2002 003 259
- JP-A- 2003 221 266
- JP-A- 2003 335 562

## Description

The present invention relates to a cement admixture. More specifically, the present invention relates to a cement admixture containing two or more members of polycarboxylic acid-based polymers having a specific constitutional unit.

A cement admixture containing a polycarboxylic acid-based polymer has been widely used in a cement composition such as cement paste, mortar, concrete, and the like, and is now indispensable material to build structure of civil engineering and construction, and the like from a cement composition. Such a cement admixture is used as a water-reducing agent, and serves to improve strength or durability of hardened material, by enhancing fluidity of a cement composition and reducing water content of the cement composition. As such a water-reducing agent, a polycarboxylic acid-based water-reducing agent having a polycarboxylic acid-based polymer as a main component, which fulfills higher water-reducing performance as compared with a conventional naphthalene-based water-reducing agent, has had many practical application results as a high performance AE water-reducing agent.

As an example thereof, a copolymer of unsaturated carboxylic acid and a vinyl ether-based monomer has been utilized in various fields such as a cement dispersing agent and a builder for a detergent.

For example, JP-A-9-309756 discloses the use of a copolymer of a vinyl ether-based monomer and maleic anhydride as a cement admixture. Also, US-B-6777517 and WO 2004/087602 disclose a method for producing a copolymer of a vinyl ether-based monomer and unsaturated carboxylic acid. The method, however, can not provide a highly pure copolymer while suppressing side reactions.

EP 0556061 discloses a cement admixture composition formed from an alkenyl ether/maleic anhydride copolymer.

EP0520602 discloses a concrete composition comprising a hydraulic cement material, water, fine aggregate, coarse aggregate and a copolymer component comprising an alkenyl ether/maleic anhydride copolymer.

JP 2003 - 221266 discloses a cement admixture comprising a copolymer having a unit derived from an unsaturated (poly)alkylene glycol ether-based monomer and a unit derived from an unsaturated polyalkylene glycol ether-based monomer and a unit derived from an unsaturated monocarboxylic acid-based monomer.

JP 2002 - 003259 discloses a cement dispersing agent consisting of a copolymer mixture obtained by copolymerizing an unsaturated carboxylic acid derivative and (meth) acrylic acid and a copolymer mixture obtained by copolymerizing an alkenyl ether monomer and maleic acid or maleic anhydride.

JP 9 - 28 66 47 discloses an additive composition containing a copolymer comprising a polyoxyalkylene, sulfonic acid and maleic acid and a copolymer containing a polyoxyalkylene.

JP 5-306152 discloses a cement dispersant composition comprising a copolymer of maleic anhydride/alkenyl ether and a copolymer of alkenyl ether/maleic anhydride.

JP 2003-335562 discloses a water reducing agent for cement comprising a copolymer and its salt.

Although a copolymer of unsaturated carboxylic acid and a vinyl ether-based monomer has superior water-reducing performance, such a problem has been still left as decrease in slump and slump flow caused by decrease in fluidity of a cement composition over time.

The present invention has been made in view of such circumstances and aims at providing a cement admixture having superior water-reducing performance, along with no decrease in slump and slump flow caused by decrease in fluidity of a cement composition over time.

The present inventors have found, after comprehensive study on various cement admixtures, that a cement admixture having as essential components a polycarboxylic acid-based polymer (A) having essentially a structure derived from a vinyl ether-based monomer, and a polycarboxylic acid-based polymer (B) having a polyalkylene glycol chain with carbon atoms of 2 to 18 and having a structure different from that of a polycarboxylic acid-based polymer (A), was useful to obtain a cement composition having superior water-reducing performance, along with no decrease in slump and slump flow caused by decrease in fluidity of a cement composition over time. On the basis of this knowledge, the present invention has been attained.

In an aspect of the invention there is provided a cement admixture comprising two or more members of polycarboxylic acid-based polymers, wherein the cement admixture comprises at least one polycarboxylic acid-based polymer (A) having a constitutional unit represented by the following formula (1) : 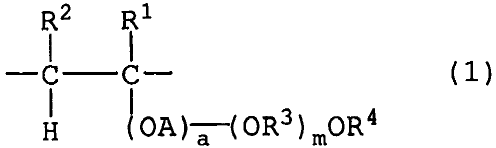 wherein R¹ and R² independently represent a hydrogen atom, an alkyl group with carbon atoms of 1 to 30, an alkenyl group with carbon atoms of 1 to 30, an aryl group with carbon atoms of 6 to 12; A represents an alkylene group with carbon atoms of 1 to 30 or an arylene group with carbon atoms of 6 to 12; a is 0 or 1; OR³ represents an oxyalkylene group with carbon atoms of 2 to 18, wherein each OR³ may be the same or different to each other, provided that when OR³ is in a mixed form of two or more members, each OR³ may be added in a block or random form; R⁴ represents a hydrogen atom or a hydrocarbon group with carbon atoms of 1 to 30; and m represents an average mole number of oxyalkylene groups added and is in the range of 1 to 300;
the polymer (A) is a copolymer of a monomer (a) represented by the following formula (4): 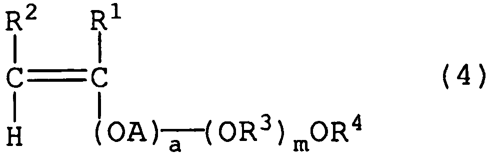 wherein in the formula (4), R¹, R², R³, R⁴, A, a, and m are as defined in the formula (1), and a monomer (c), wherein the monomer (c) is selected from the group consisting of an acrylic acid, a methacrylic acid, and, a monovalent metal salt, a bivalent metal salt, an ammonium salt and an organic amine salt thereof; and
at least one polycarboxylic acid-based polymer (B) having a constitutional unit represented by the following formula (2) : 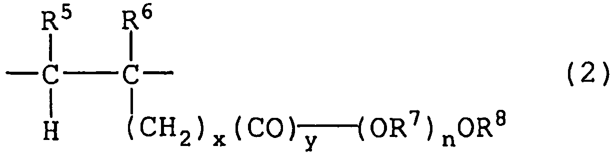 wherein R⁵ and R⁶ independently represent a hydrogen atom, a methyl group; x is an integer in the range of 0 to 2 and y is 1 ;
OR⁷ represents an oxyalkylene group with carbon atoms of 2 to 18, wherein each OR⁷ may be the same or different to each other, provided that when OR⁷ is in a mixed form of two or more members, each OR⁷ may be added in a block or random form; R⁸ represents a hydrogen atom or a hydrocarbon group with carbon atoms of 1 to 30; and n represents an average mole number of oxyalkylene groups added and is in the range of 1 to 300; and the weight ratio of the polycarboxylic acid-based polymer (A) and the polycarboxylic acid-based polymer (B) [weight ratio of (A)/(B)] is in the range of 1/99 to 99/1.

In an embodiment a cement admixture of claim 1, wherein in the formula (2), n is in the range of 1 to 10.

In an embodiment a cement admixture of claim 1 or 2, wherein in the formula (2), OR⁷ is represented by the following formula (3): 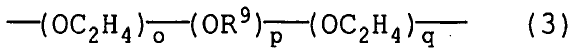 wherein R⁹ represents an alkylene group with carbon atoms of 3 to 18; o and q independently represent an average mole number of oxyalkylene groups added and is in the range of 0 to 200, provided that when either one of o or q is 0, the other is in the range of 1 to 200; p represents an average mole number of oxyalkylene groups added and is in the range of 1 to 50; and the total of number of o, p and q (o+p+q), is in the range of 2 to 300.

In an emloodiment acement admixture of any one of claims 1 to 3, wherein the weight ratio of said polycarboxylic acid-based polymer (A) and said polycarboxylic acid-based polymer (B) [weight ratio of (A)/(B)] is in the range of 1/99 to 90/10.

The cement admixture of the present invention has a composition as described above and thus fulfills superior cement dispersing performance and water-reducing performance, and can suitably be applied to various cement compositions. In addition, the cement admixture can also provide easy work at the field handling thereof due to showing little decrease in slump and slump flow caused by decrease in fluidity of a cement composition over time. Accordingly, by using the cement admixture of the present invention, work efficiency, and the like can be improved in building structure of civil engineering and construction. Further, the use of the cement admixture can provide significant economic merits, because of only the small amount of a cement admixture added is required to attain such effects.

The above and other objects, features and advantages of the present invention will become clear from the following description of the preferred embodiments.

The present invention is now explained in detail below.

A cement admixture is provided comprising two or more members of polycarboxylic acid-based polymers, wherein the cement admixture comprises at least one polycarboxylic acid-based polymer (A) having a constitutional unit represented by the following formula (1) : 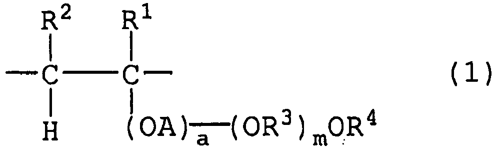 wherein R¹ and R² independently represent a hydrogen atom, an alkyl group with carbon atoms of 1 to 30, an alkenyl group with carbon atoms of 1 to 30, an aryl group with carbon atoms of 6 to 12; A represents an alkylene group with carbon atoms of 1 to 30 or an arylene group with carbon atoms of 6 to 12; a is 0 or 1; OR³ represents an oxyalkylene group with carbon atoms of 2 to 18, wherein each OR³ may be the same or different to each other, provided that when OR³ is in a mixed form of two or more members, each OR³ may be added in a block or random form; R⁴ represents a hydrogen atom or a hydrocarbon group with carbon atoms of 1 to 30; and m represents an average mole number of oxyalkylene groups added and is in the range of 1 to 300;
the polymer (A) is a copolymer of a monomer (a) represented by the following formula (4): 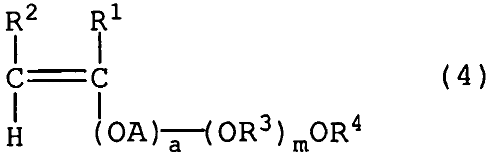 wherein in the formula (4), R¹, R², R³, R⁴, A, a, and m are as defined in the formula (1), and a monomer (c), wherein the monomer (c) is selected from the group consisting of an acrylic acid, a methacrylic acid, and, a monovalent metal salt, a bivalent metal salt, an ammonium salt and an organic amine salt thereof; and
at least one polycarboxylic acid-based polymer (B) having a constitutional unit represented by the following formula (2) : 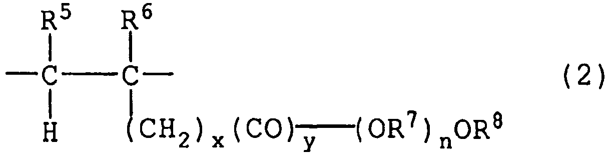 wherein R⁵ and R⁶ independently represent a hydrogen atom, a methyl group; x is an integer in the range of 0 to 2 and y is 1, ;
OR⁷ represents an oxyalkylene group with carbon atoms of 2 to 18, wherein each OR⁷ may be the same or different to each other, provided that when OR⁷ is in a mixed form of two or more members, each OR⁷ may be added in a block or random form; R⁸ represents a hydrogen atom or a hydrocarbon group with carbon atoms of 1 to 30; and n represents an average mole number of oxyalkylene groups added and is in the range of 1 to 300; and the weight ratio of the polycarboxylic acid-based polymer (A) and the polycarboxylic acid-based polymer (B) [weight ratio of (A)/(B)] is in the range of 1/99 to 99/1.

The polycarboxylic acid-based polymer (A) as one of the essential components in the present invention is a polymer having two or more carboxyl groups or salts thereof in its molecule, and having a specific structure represented by the formula (1) introduced as a constitutional unit of the polymer. In addition, the polycarboxylic acid-based polymer (B) as the other essential component in the present invention is a polymer having two or more carboxyl groups or salts thereof in its molecule, and having a specific structure represented by the formula (2) introduced as a constitutional unit of the polymer. The polycarboxylic acid-based polymer (B) is preferably a polymer having two or more carboxyl groups or salts thereof in its molecule, and having a specific structure represented by the formula (2) wherein n is in the range of 1 to 10, and/or a specific structure represented by the formula (2) wherein at least a part of OR⁷ in the formula (2) is represented by the following formula (3), which is explained in detail below, introduced as a constitutional unit of the polymer.

In the present invention, the weight ratio of the polycarboxylic acid-based polymer (A) and the polycarboxylic acid-based polymer (B) [weight ratio of (A)/(B)] is an arbitrary one within the range of 1/99 to 99/1. However, in the case when effects of suppressing and preventing the decrease in slump and slump flow caused by decrease in fluidity of a cement composition over time are particularly desired, a cement admixture of the present invention preferably contains the polycarboxylic acid-based polymer (B) in a larger amount than the polycarboxylic acid-based polymer (A). While, in the case when the addition amount of a cement admixture is particularly emphasized, a cement admixture of the present invention preferably contains the polycarboxylic acid-based polymer (A) in a relatively larger amount than the polycarboxylic acid-based polymer (B).

Namely, in particular, in view of suppression and prevention of decrease in slump and slump flow caused by decrease in fluidity of a cement composition over time, the weight ratio of the polycarboxylic acid-based polymer (A) and the polycarboxylic acid-based polymer (B) [weight ratio of (A) / (B) ] is preferably in the range of 50/50 to 1/99, more preferably 40/60 to 1/99, and most preferably 30/70 to 1/99. While when the addition amount of a cement admixture is particularly emphasized, namely in the case when the addition amount of a cement admixture necessary to disperse and fluidize cement until a prescribed slump flow value is attained, should be reduced, the weight ratio of the polycarboxylic acid-based polymer (A) and the polycarboxylic acid-based polymer (B) [weight ratio of (A) / (B) ] is preferably in the range of 10/90 to 99/1, more preferably 20/80 to 99/1 and most preferably 30/70 to 99/1.

The cement admixture of the present invention may be composed of only the polycarboxylic acid-based polymer (A) and the polycarboxylic acid-based polymer (B), or alternatively in addition to the polycarboxylic acid-based polymers (A) and (B), other components may be contained. When the suppression and prevention of decrease in slump and slump flow caused by decrease in fluidity of a cement composition over time is particularly desired, a cement admixture of the present invention is most preferably composed of only polycarboxylic acid-based polymers (A) and (B), i.e., the total weight ratio of the polycarboxylic acid-based polymer (A) and the polycarboxylic acid-based polymer (B), occupying the total weight of a cement admixture, is most preferably 100% by weight. While, when the addition amount of a cement admixture is particularly emphasized, namely when the addition amount of a cement admixture necessary to disperse and fluidize cement until a prescribed slump flow value is attained, should be reduced, other components may further be contained in addition to polycarboxylic acid-based polymers (A) and (B). In such a case, the total weight ratio of the polycarboxylic acid-based polymer (A) and the polycarboxylic acid-based polymer (B), occupying the total weight of a cement admixture of the present invention, is not especially limited as long as it is such ratio as fulfills the desired effects (for example, superior water-reducing performance, along with effects of suppressing and preventing the decrease in slump value and slump flow value over time). It is preferably not lower than 50% by weight, further preferably not lower than 60% by weight, most preferably not lower than 70% by weight, and particularly most preferably not lower than 80% by weight.

A polycarboxylic acid-based polymer (A), as a component of a cement admixture, has a constitutional unit derived from a monomer having a carboxyl group or the salt thereof in its molecule, and a constitutional unit represented by the following formula (1):

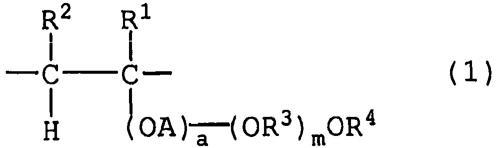

In the above formula (1), R¹ and R² represent a hydrogen atom, an alkyl group with carbon atoms of 1 to 30, an alkenyl group with carbon atoms of 1 to 30, or an aryl group with carbon atoms of 6 to 12. In this case, R¹ and R² may be the same as or different to each other. An alkyl group with carbon atoms of 1 to 30 is not especially limited, and may be, for example, straight and branched chain alkyl groups having carbon atoms of 1 to 30 such as methyl, ethyl, propyl, isopropyl, n-butyl, isobutyl, sec-butyl, tert-butyl, pentyl, isopentyl, neopentyl, hexyl, heptyl, octyl, nonyl, decyl, undecyl, dodecyl, isooctyl, 2,3,5-trimethylhexyl, 4-ethyl-5-methyloctyl, 2-ethylhexyl, tetradecyl, octadecyl, and icosyl; cycloalkyl groups such as cyclobutyl, cyclopentyl, cyclohexyl, cycloheptyl, and cycoocytyl, and the like. In addition, an alkenyl group with carbon atoms of 1 to 30 is not especially limited, and may be for example, straight chained or branched chained alkenyl groups with carbon atoms of 1 to 30 such as vinyl (CH₂=CH-), 1-propenyl, allyl (CH₂=CHCH₂-), isopropenyl, 1-butenyl, 2-butenyl and 2-pentenyl may be included. An aryl group with carbon atoms of 6 to 12 is not especially limited and for example, phenyl, benzyl, phenethyl, o-, m- or p-tolyl, 2,3- or 2,4-xylyl, mesityl, naphthyl, and the like. Among these, R¹ and R² are preferably a hydrogen atom and a methyl group, and more preferably a hydrogen atom.

In the formula (1), A represents an alkylene group with carbon atoms of 1 to 30 or an arylene group with carbon atoms of 6 to 12. In this case, an alkylene group with carbon atoms of 1 to 30 is not especially limited, and may be, for example, straight or branched chain alkylene groups with carbon atoms of 1 to 30 such as methylene, ethylene, trimethylene, tetramethylene, propylene, butylene, and the like. In addition, an arylene group with carbon atoms of 6 to 12 is not especially limited, and may be, for example, o-, m-, p-phenylene, 1,2-, 1,4-naphthylene, and the like. Further, a is 0 or 1.

In the formula (1), OR³ represents an oxyalkylene group with carbon atoms of 2 to 18, preferably an oxyalkylene group with carbon atoms of 2 to 8 and more preferably an oxyalkylene group with carbon atoms of 2 to 4. As such an oxyalkylene group, oxyethylene group, oxypropylene group, oxybutylene group, oxyisobutylene group, oxystyrene group, and the like may be preferably included. More preferably, OR³ represents an oxyethylene group, oxypropylene group or oxybutylene group, and further more preferably, an oxyethylene group or oxypropylene group. In the case when these oxyalkylene groups are present in plural in one constitutional unit (namely, m in the formula (2) is 2 or more), they may be present singly or in a mixed form of two or more members in one constitutional unit. In the case when two or more members of oxyalkylene groups are present, theymay take any form of a random addition, ablockaddition, analternateaddition, and the like. Further, m represents an average mole number of oxyalkylene groups added and is in the range of 1 to 300. The number, m, over 300 would provide high viscosity and worsen workability. Preferably, m is in the range of 1 to 200, more preferably 5 to 100, further preferably 10 to 60, and most preferably 15 to 40.

In the formula (1), R⁴ represents a hydrogen atom or a hydrocarbon group with carbon atoms of 1 to 30, preferably a hydrogen atom or a hydrocarbon group with carbon atoms of 1 to 20, more preferably a hydrogen atom or a hydrocarbon group with carbon atoms of 1 to 18, and particularly preferably a hydrogen atom or a hydrocarbon group with carbon atoms of 1 to 12. As such a hydrocarbon group, specifically, straight or branched chain alkyl groups such as methyl, ethyl, propyl, isopropyl, n-butyl, isobutyl, sec-butyl, tert-butyl, pentyl, isopentyl, neopentyl, hexyl, heptyl, octyl, nonyl, decyl, undecyl, dodecyl, isooctyl, 2,3,5-trimethylhexyl, 4-ethyl-5-methyloctyl, 2-ethylhexyl, tetradecyl, octadecyl, and icosyl; cycloalkyl groups such as cyclopropyl, cyclobutyl, cyclopentyl, cyclohexyl, cycloheptyl, and cyclooctyl; aryl group such as phenyl, benzyl, phenethyl, o-, m-, or p-tolyl, 2,3-, or 2,4-xylyl, mesityl, naphthyl, anthryl, phenanthryl, biphenylyl, benzhydryl, trityl, and pyrenyl, and the like may be included. Among these, R⁴ preferably represents a hydrogen atom or a hydrocarbon group with carbon atoms of 1 to 20, and more preferably a hydrogen atom or a methyl group.

Accordingly, a constitutional unit represented by the formula (1) is derived from a monomer (a) represented by the following formula (4).

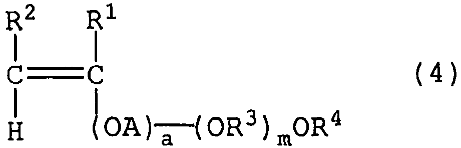

In the above formula (4), R¹, R², R³, R⁴, A, a, and m are as defined in the formula (1).

A polycarboxylic acid-based polymer (A), an essential component according to the present invention, may be any polymer as long as it has a constitutional unit represented by the formula (1), and a constitutional unit derived from a monomer having a carboxyl group or the salt thereof in its molecule, as described in detail below, and a synthesis route thereof is not limited. As an example of the synthesis route, the following route can be used. Specifically, a polycarboxylic acid-based polymer (A) can be obtained by polymerization of a single or two or more monomers having a carboxyl group or the salt thereof and a polymerizable double bond in its molecule, and a single or two or more monomers (a) represented by the formula (4).

, The monomer (a) is not especially limited, as long as it has a structure represented by the formula (4). As an example thereof, a so-called vinyl-based monomer can be included. As a further specific example, a vinyl ether-based monomer represented by the formula (4) wherein OR⁴ is an OH group and obtained by the addition of an alkylene oxide to a vinyl alcohol, or a vinyl-based monomer represented by the formula (4) wherein OR⁴ is an OCH₃ group and obtained by the addition of methoxypolyalkylene oxide to acetylene can be included.

A polycarboxylic acid-based polymer (B), as a component of a cement admixture, has a constitutional unit derived from a monomer having two or more carboxyl groups and salts thereof in its molecule, and a constitutional unit represented by the following formula (2).

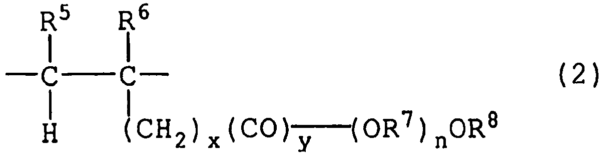

In the above formula (2), R⁵ and R⁶ represent a hydrogen atom or a methyl group. In this case R⁵ and R⁶ may be the same as or different to each other. Further, x represents the number of a methylene (-CH₂-) unit present in one constitutional unit of the formula (2), and is an integer in the range of 0 to 2, preferably an integer of 0 to 1, and more preferably 0. The symbol, y represents the number of a carbonyl (-CO-) unit present in one constitutional unit of the formula (2), and is 1.

In the formula (2), R⁸ represents a hydrogen atom or a hydrocarbon group with carbon atoms of 1 to 30, preferably a hydrogen atom or a hydrocarbon group with carbon atoms of 1 to 20, more preferably a hydrogen atom or a hydrocarbon group with carbon atoms of 1 to 18, and particularly preferably a hydrogen atom or a hydrocarbon group with carbon atoms of 1 to 12. As such a hydrocarbon group, specifically, straight or branched chain alkyl groups such as methyl, ethyl, propyl, isopropyl, n-butyl, isobutyl, sec-butyl, tert-butyl,pentyl, isopentyl, neopentyl, hexyl, heptyl, octyl, nonyl, decyl, undecyl, dodecyl, isooctyl, 2,3,5-trimethylhexyl, 4-ethyl-5-methyloctyl, 2-ethylhexyl, tetradecyl, octadecyl, and icosyl; cycloalkyl groups such as cyclopropyl, cyclobutyl, cyclopentyl, cyclohexyl, cycloheptyl, and cyclooctyl; aryl groups such as phenyl, benzyl, phenethyl, o-, m- or p-tolyl, 2,3- or 2,4-xylyl, mesityl, naphthyl, anthryl, phenanthryl, biphenylyl, benzhydryl, trityl and pyrenyl, and the like may be included. Among these, R⁸ preferably represents a hydrogen atom or a hydrocarbon group with carbon atoms of 1 to 20, more preferably a hydrogen atom or a methyl group and most preferably a methyl group.

In the formula (2), n represents an average mole number of oxyalkylene groups (OR⁷) added and is a number in the range of 1 to 300. If n, the average mole number of oxyalkylene groups (OR⁷) added, is relatively small, the adsorption rate of a polycarboxylic acid-based polymer (B) to cement would become relatively slow, by which a polycarboxylic acid-based polymer (B) can effectively act on cement even after certain time passes. Therefore, in the case to effectively suppress and prevent, in particular, decrease in slump and slump flow caused by decrease in fluidity of a cement composition over time, n is preferably in the range of 1 to 100, more preferably 1 to 50, further preferably 1 to 25, and most preferably 1 to 10. On the contrary, if n, the average mole number of oxyalkylene groups (OR⁷) added, is large, the adsorption rate of a polycarboxylic acid-based polymer (B) to cement would become fast, by which effects of a polycarboxylic acid-based polymer (B) on cement can relatively earlier be expressed. Therefore, in the case when the addition amount of a cement admixture is particularly emphasized, n is preferably in the range of 6 to 300, more preferably 10 to 300, further preferably 25 to 300, and most preferably 75 to 300.

In the formula (2), OR⁷ represents an oxyalkylene group with carbon atoms of 2 to 18, preferably an oxyalkylene group with carbon atoms of 2 to 8, and more preferably an oxyalkylene group with carbon atoms of 2 to 4. As such an oxyalkylene group, oxyethylene group, oxypropylene group, oxybutylene group, oxyisobutylene group, and oxystyrene group may be preferably included, and oxyethylene group, oxypropylene group and oxybutylenegroup may be more preferable, and oxyethylene group and oxypropylene group may be further more preferable. In the case when these oxyalkylene groups are present plurally in one constitutional unit (namely, n in the formula (2) is 2 or more), they may be present singly or in a mixed form of two or more members in one constitutional unit. In the case when two or more members of oxyalkylene groups are present, theymay take any formof a random addition, a block addition, an alternate addition, and the like.

In this case, at least one of OR⁷ in the formula (2) is preferably represented by the following formula (3):

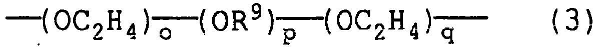

In the formula (3), polyoxyalkylene chains represented by oxyethylene (repeated unit number: o), oxyalkylene (repeated unit number: p) and oxyethylene (repeated unit number: q), take a form of so-called a block copolymer of an A-B type or an A-B-A type. When such specific structure is contained in the polymer, an oxyethylene block, a hydrophilic block, can strongly express water-reducing performance, while an oxyalkylene block, a hydrophobic block, can further furnish workability. Therefore, a cement admixture containing a polycarboxylic acid-based polymer (B) having such polyoxyalkylene chains can express more superior effects.

In the formula (3), R⁹ represents an alkylene group with carbon atoms of 3 to 18. As such an oxyalkylene group (OR⁹), 2-methylethylene group (oxypropylene group), oxybutylene group, oxyisobutylene group, oxy 1-butene group, oxy 2-butene group and oxystyrene group may be preferably included, and oxypropylenegroup and oxybutylene group may be more preferable, and oxypropylene group may be further more preferable. In the case when these oxyalkylene groups are present in plural in one constitutional unit (namely, p in the formula (2) is 2 or more), they may be present singly or in a mixed form of two or more members in one constitutional unit. In the case when two or more members of oxyalkylene groups are present, theymay take any form of a random addition, a block addition, an alternate addition, and the like. Among these, R⁹ is preferably 2-methylethylene group (which precursor is generally propylene oxide) having carbon atoms

of 3. In the formula (3), o and q each represent an average mole number of oxyalkylene groups added, and is in the range of 1 to 300. According to the present invention, o and q each represent an average mole number of oxyalkylene groups added and is in the range of 0 to 200, provided that when either one of o and q is 0, the other is in the range of 1 to 200. In this case, o and q over 300 would increase viscosity and may deteriorate workability. The numbers, o and q, may be the same or different values. When either one of o or q is 0, the other is not 0. According to the invention the numbers, o and q, preferably are in the range of 0 to 200, more preferably 1 to 100, further preferably are 1 to 60, and most preferably are 1 to 40. In addition, p represents an average mole number of oxyalkylene groups added, and is in the range of 1 to 50. A p value over 50 may lower water-reducing performance, or increase hydrophobicity, and formulation in cement may bring about immiscibility with water for mixing and may deteriorate workability. The number, p, is preferably in the range of 1 to 20, more preferably 1 to 10, further preferably 1 to 6, and most preferably 1 to 4. Total number of o, p and q, (o+p+q), is in the range of 2 to 300. The total number over 300 would increase viscosity and may deteriorate workability. The total number of o, p and q, (o+p+q), is preferably in the range of 6 to 100, and more preferably 25 to 75.

Therefore, a constitutional unit represented by the formula (2) is derived from a monomer (b) represented by the following formula (5).

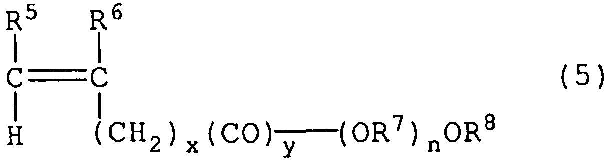

In the formula (5), R⁵, R⁶, R⁷, R⁸, x, y and n are as defined in the formula (2).

A polycarboxylic acid-based polymer (B), the other essential component according to the present invention, may be any polymer as long as it has a constitutional unit represented by the formula (2), and a constitutional unit derived from a monomer having two or more carboxyl groups or salts thereof in its molecule, as is described in detail later, and a synthesis route thereof is not limited. As an example of the synthesis route, the following route can be used. Specifically, a polycarboxylic acid-based polymer (B) can be obtained by polymerization of a single or two or more monomers having a carboxyl group or the salt thereof and a polymerizable double bond in its molecule, and a single or two or more monomers (b) represented by the formula (5). In this case, n of 1 to 10 in the formula (5) is preferable due to providing no decrease in slump or slump flow caused by decrease in fluidity of a cement composition over time. In the case when OR⁷ in the formula (5) is represented by the formula (3), a hydrophilic block strongly may express water-reducing performance, and a hydrophobic block further may furnish workability, and provide a more superior cement admixture and is thus preferable.

A monomer (b) represented by the formula (5) is not especially limited as long as it has a structure represented by the formula (5), and can be obtained by, for example, the addition of ethylene oxide and/or propylene oxide and/or other alkylene oxide having carbon atoms of 2 to 18, in such amount as to provide a specified repeating number, to an unsaturated alcohol or unsaturated carboxylic acid. Alternatively, it can be obtained by an esterification reaction between an alcohol obtained by the addition of ethylene oxide in such amount as to provide a specified repeating number, to alcohols or phenols having a hydrocarbon group with carbon atoms of 1 to 20, and unsaturated carboxylic acid, or an ester exchange reaction between the alcohol and unsaturated carboxylate ester.

As the unsaturated alcohol which can be used in the method, vinyl alcohol, allyl alcohol, methallyl alcohol, 3-butene-1-ol, 3-methyl-3-butene-1-ol, 3-methyl-2-butene-1-ol, 2-methyl-3-butene-2-ol, 2-methyl-2-butene-1-ol, 2-methyl-3-butene-1-ol, and the like may be included. In addition, as the unsaturated carboxylic acid, acrylic acid, methacrylic acid, and the like may be included. As the unsaturated carboxylate ester, an alkyl ester of the unsaturated carboxylic acid, and the like can be' used. As an alkylene oxide having carbon atoms of 2 to 18, ethylene oxide, propylene oxide, butylene oxide, unsaturated hydrocarbon epoxide, and the like maybe included. Ethylene oxide and/or propylene oxide are preferable. As alcohols or phenols having a hydrocarbon group with carbon atoms of 1 to 20, alkyl alcohols such as methanol, ethanol and butanol; alcohols having an aryl group such as benzyl alcohol; phenols such as phenol and para-methylphenol may be included. Alcohols having carbon atoms of 1 to 3 such as methanol, ethanol, butanol are preferable.

In the synthesis route of a polycarboxylic acid-based polymer (A) or a polycarboxylic acid-based polymer (B), as a monomer having a carboxyl group or the salt thereof and a polymerizable double bond in its molecule, to copolymerize with a monomer of the formula (4) or (5), a monomer (c), the monomer (c) is selected from the group consisting of an acrylic acid, a methacrylic acid, and, a monovalent metal salt, a bivalent metal salt, an ammonium salt and an organic amine salt thereof,
wherein the monomer (c) for forming the polymer (A) and the monomer (c) for forming the polymer (B) are the same or different; is included.

### Method for producing a polycarboxylic acid-based_polymer (A)

A polycarboxylic acid-based polymer (A), an essential component according to the present invention, is preferably a polymer having a constitutional unit of the formula (1), and a constitutional unit derived from a monomer having two or more carboxyl groups or salts thereof in its molecule, and a synthesis route thereof is not limited. A preferable method for producing a polycarboxylic acid-based polymer (A) relevant to the present invention is described below.

Specifically, by copolymerization of a monomer (a) represented by the formula (4) (hereinafter simply referred to as "monomer (a)"): 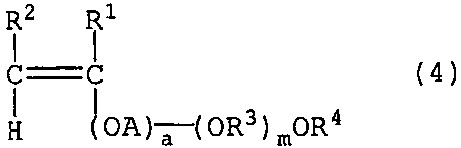 and a monomer (c) the monomer (c) is selected from the group consisting of an acrylic acid, a methacrylic acid, and, a monovalent metal salt, a bivalent metal salt, an ammonium salt and an organic amine salt thereof, and optionally another monomer (hereinafter simply referred to as "monomer (d)"), a polycarboxylic acid-based polymer (A) can be obtained. The amount of the monomer (a) used is not especially limited as long as the amount allows to attain desired effects, and is preferably in the range of 10 to 95% by weight, more preferably 50 to 90% by weight, and further preferably 65 to 85% by weight, based on total weight of monomers to be used. In addition, the amount of the monomer (c) used is also not especially limited as long as the amount allows to attain desired effects, and is preferably in the range of 5 to 90% by weight, more preferably 10 to 50% by weight, and further preferably 15 to 35% by weight, based on total weight of monomers to be used. A monomer (d), other than the monomers (a) and (c), may further be used as a copolymerization component. In this case, the amount of the monomer (d) used is in the range of 0 to 50% by weight based on total weight of monomers to be used. The monomer (d) is also not especially limited as long as it does not inhibit effects provided by the monomers (a) and (c), and desired effects can further be furnished. For example, styrene, (meth)acrylic acid esters, acrylonitrile, acrylamide, (meth)allyl sulfonate, 2-(meth)acryloxyethyl sulfonate, 3-(meth)acryloxypropyl sulfonate, 3-(meth)acryloxy-2-hydroxypropyl sulfonate, 3-(meth)acryloxy-2-hydroxypropyl sulfophenyl ether, 3-(meth)acryloxy-2--hydroxypropyloxy sulfobenzoate, 4-(meth)acryloxybutyl sulfonate, (meth)acrylamidemethyl sulfonic acid, (meth)acrylamideethyl sulfonic acid, 2-methylpropanesulfonic acid (meth) acrylamide, and the like may be included. The monomers (d) may be used singly or as a mixed form of two or more members.

By polymerization of these monomers, the polycarboxylic acid-based polymer (A) can be obtained. As a polymerization method, a well-known method such as aqueous polymerization, or solution polymerization such as polymerization in an organic solvent, emulsion polymerization, or mass polymerization, by using a polymerization initiator and a chain transfer agent, if necessary, can be used. In consideration, in particular, of reaction control or handling easiness of a polymer, solution polymerization is preferable. As a solvent in carrying out solution polymerization, for example, a single member or two or more members selected among water; lower alcohols such as methyl alcohol, ethyl alcohol and 2-propyl alcohol; aromatic or aliphatic hydrocarbons such as benzene, toluene, xylene, cyclohexane and n-hexane; ester compounds such as ethyl acetate; ketone compounds such as acetone and methyl ethyl ketone, and the like can be used. In consideration of solubility of monomers as raw materials or the resultant polymer, along with convenience in using this polymer, use of at least one member selected from the group consisting of water and lower alcohols having carbon atoms of 1 to 4 is preferable. Although the amount of a solvent to be used in this case is not especially limited, in consideration of easiness of reaction control or little occurrence of side reactions, such an amount is preferable as to give a concentration, in a solvent, of monomer components comprising monomers (a) and (c), along with a monomer (d), if necessary, in the range of 1 to 90% by weight, more preferably 10 to 80% by weight, and most preferably 20 to 70% by weight.

In the polymerization reaction essentially using the monomers (a) and (c), an unsaturated bond of the monomer (a) component, so-called vinyl-based monomer component, is decomposed under acidic conditions as by hemiacetalization or homopolymerization, which induces inhibition of copolymerization with an objective monomer (c). Therefore, to suppress decomposition of the unsaturated bond of the monomer (a), decrease in reaction temperature is preferable. Reaction temperature is preferably in the range of 0°C to 90°C, more preferably 5°C to 60°C, and most preferably 10°C to 30°C.

As a polymerization initiator, well-known initiators canbe used and persulfates such as ammoniumpersulfate, sodium persulfate, and potassium persulfate; hydrogen peroxide; azo compounds such as azobis-2-methylpropionamidine hydrochloride and azobisisobutyronitrile; peroxides such as benzoyl peroxide, lauroyl peroxide and cumene hydroperoxide can be advantageously used. An accelerator may be used in combination in the polymerization, and an accelerator which can be used in such a case is not especially limited, and, for example, reducing agents such as sodium hydrogen sulfite, sodium sulfite, Mohr salt, sodium pyrobisulfite, formaldehyde sodium sulfoxylate, ascorbic acid and erythorbic acid; and amine compounds such as ethylene diamine, disodium ethylenediaminotetraacetate, and glycin can be used. These polymerization initiators or accelerators may be used singly or as in a mixed form of two or more members, respectively.

Also in mass polymerization, a method thereof, kind or quantity of a polymerization initiator to be used, polymerization conditions, and the like are not especially limited, and well-known methods, and the like can be used. For example, as a polymerization initiator, peroxides such as benzoyl peroxide or lauroyl peroxide; hydroperoxide such as cumene hydroperoxide; and azo-compounds such as azobisisobutyronitrile, and the like can be used. In addition, mass polymerization is carried out at a temperature in the range of 50 to 200°C, for example.

A chain transfer agent can also be used, if necessary, in the polymerization method, to adjust molecular weight of the resultant polymer. Such a chain transfer agent is not especially limited, and well-known ones can be used singly or as in a mixed form of two or more members. For example, as a hydrophobic chain transfer agent, thiol-based chain transfer agents such as butanethiol, octanethiol, decanethiol, dodecanethiol, hexadecanethiol, octadecanethiol, cyclohexylmercaptane, thiophenol, octyl thioglycolate, octyl 2-mercaptopropionate, octyl 3-mercaptopropionate, 2-ethylhexyl mercaptopropionate, 2-mercaptoethyl octanoate, 1,8-dimercapto-3,6-dioxaoctane, decanetrithiol and dodecylmercaptane; halides such as carbon tetrachloride, carbon tetrabromide, methylene chloride, bromoform and bromotrichloroethane; unsaturated hydrocarbon compounds such as α-methylstyrene dimmer, α- terpinene, γ- terpinene, dipentene and terpinolene, and the like may be included. These hydrophobic chain transfer agents may be used singly or as in a mixed form of two or more members. As a hydrophilic chain transfer agent, thiol-based chain transfer agents such as mercaptoethanol, thioglycerol, thioglycolic acid, mercatopropionic acid, 2-mercatopropionic acid, 3-mercatopropionic acid, thiomalic acid and 2-mercaptoethane sulfonic acid; primary alcohols such as 2-aminopropane-1-ol; secondary alcohols such as isopropanol; lower oxides and salts thereof such as phosphorous acid, hypophosphorous acid and salts thereof (sodium hypophosphite, potassium hypophosphite, and the like), and sulfurous acid, trioxosulfuric acid, dithionous acid, metabisulfurous acid and salts thereof (sodium sulfite, sodium bisulfite, sodium dithionite, sodium metabisulfite, potassium sulfite, potassium bisulfite, potassium dithionite, potassium metabisulfite, and the like), and the likemaybe included. Thesehydrophilicchaintransfer agents may be used singly or as in a mixed form of two or more members.

As the addition method for the chain transfer agent to a reactor, any method such as a charging method at one time in whole amount, or a continuous charging method as by dropping and in portion-wise can be applicable, however, continuous charging is preferable. In addition, a chain transfer agent may be introduced to a reactor as it is or may be mixed in advance with a monomer or a solvent. The polymerization method may be carried out in a batch system or a continuous system.

As the addition method for a monomer or a polymerization initiator to a reactor in the polymerization method, a method for copolymerization by means of charging all of the monomers in a reactor and subsequently adding a polymerization initiator into the reactor; a method for polymerization by means of charging a part of the monomers in a reactor and subsequently adding a polymerization initiator and the remaining monomer component into the reactor; and a method for charging a polymerization solvent in a reactor, and then a whole quantity of a monomer and a polymerization initiator are added at one time or sequentially; and the like are suitable. Among these methods, due to enabling to make molecular weight distribution of the resultant polymer narrow (sharp) and enhance cement dispersibility, namely an action to increase fluidity of a cement composition, a method for polymerization by means of sequential dropping of a polymerization initiator and a monomer to a reactor is preferable.

As shown above, in the case of using a monomer (a), namely a vinyl-based monomer, a copolymerization reaction with a monomer (c) is inhibited under acidic conditions of a system, by a side reaction. In the present reaction system, major cause of making inside the reaction system acidic is present in the case , when the monomer (c) is an acidic monomer such as (meth)acrylic acid. In this case, because concentration of an acidic monomer has significant effects on reaction rate of a side reaction, neutralization of a part of the acidic monomer and suppression of a side reaction to accelerate an objective copolymerization of monomers (a) and (c) is desirable. Neutralization degree of the acidic monomer is preferably in the range of 1 to 70% by mol, more preferably 5 to 60% by mol, and particularly preferably 10 to 50% by mol. Neutralization degree of the acidic monomer over 70% by mol would lower reactivity of the monomer (c) and may deposit many unsaturated carboxylate salts at wall surface of a container for storing the monomer (c). For partial neutralization of the monomer (c), for example, an inorganic substance such as hydroxides and carbon salts of monovalent metal or bivalent metal; ammonia; organic amine can be used. Among them, aqueous solution of hydroxides of monovalent metals such as sodium hydroxide and potassium hydroxide are preferable.

### A method for producing a polycarboxylic acid-based polymer (B)

A polycarboxylic acid-based polymer (B), the other essential component according to the present invention, is a polymer having a constitutional unit of the formula (2), and a constitutional unit derived from a monomer having two or more carboxyl groups or salts thereof in its molecule, and a synthesis route thereof is not limited. A preferable method for producing a polycarboxylic acid-based polymer (B) relevant to the present invention is described below.

Specifically, by copolymerization of a monomer (b) represented by the formula (5) (hereinafter simply referred to as "monomer (b)"): 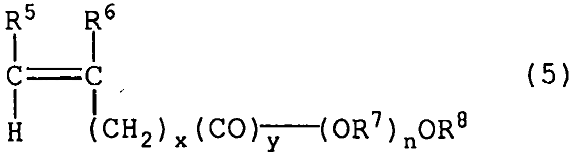 and a monomer (c) represented by the formula (6), and optionally another monomer (hereinafter simply referred to as "monomer (e)"), a polycarboxylic acid-based polymer (B) can be obtained. The amount of the monomer (b) is not especially limited as long as the amount allows to attain desired effect, and is preferably in the range of 10 to 95% by weight, more preferably 50 to 90% by weight and further preferably 65 to 85% by weight, based on total weight of monomers to be used. In addition, the amount of the monomer (c) used is also not especially limited as long as the amount allows to attain desired effects, and is preferably in the range of 5 to 90% by weight, more preferably 10 to 50% by weight, and further preferably 15 to 35% by weight, based on total weight of monomers to be used. A monomer (e), other than the monomers (b) and (c), may further be used as a copolymerization component. In this case, the amount of the monomer (e) used is in the range of 0 to 50% by weight, based on total weight of monomers to be used. The monomer (e) is also not especially limited as long as it does not inhibit effects provided by the monomers (b) and (c), and desired effect can further be furnished. For example, in addition to the examples of the monomer (d) described in the production of a polycarboxylic acid-based polymer (A), so-called modified polyethylene imine monomers, such as a compound obtained by the addition of 0.5 to 10 moles of glycidyl methacrylate to 1 mol of a polyalkyleneimine alkyleneoxide adduct obtained by the addition of 1 to 20 moles of ethylene oxide (EO) per 1 equivalent weight of activated hydrogen (-NH) derived from an amino group of polyethylene imine may be included.

By polymerization of these monomers, the polycarboxylic acid-based polymer (B) can be obtained. As a method for producing the polycarboxylic acid-based polymer (B) in this case, a similar method as in a method for producing the polycarboxylic acid-based polymer (A) can be used. Specifically, the polymerization can be carried out by using a similar polymerization initiator, and a similar chain transfer agent, if necessary, and a similar solvent, as used in obtaining the polycarboxylic acid-based polymer (A). The amount of a solvent used in the polymerization is not especially limited. Although the amount of a solvent to be used in this case is not especially limited, in consideration of easiness of reaction control or little occurrence of side reactions, such an amount is preferable as to give a concentration, in a solvent, of monomer components comprising monomers (b) and (c), along with a monomer (e), if necessary, in the range of 2 to 70% by weight, and most preferably 3 to 50% by weight.

In a polymerization method for the polycarboxylic acid-based polymer (B), polymerization conditions such as polymerization temperature can be determined, as appropriate, depending on a polymerization method, a solvent, a polymerization initiator and a chain transfer agent to be used. The polymerization temperature is preferably, in general, at not lower than 0°C, and preferably not higher than 150°C. More preferably, it is in a range of 40°C to 120°C, and most preferably in a range of 60°C to 80°C.

The polycarboxylic acid-based polymer (A) and the polycarboxylic acid-based polymer (B) obtained by the method may be used as a major component of a cement admixture, even as they are, however, if necessary, they may be used in a form of polymer salts by further neutralization with an alkaline substance. As the alkaline substance in this case, an inorganic salt such as a hydroxide, a chloride and a carbonate of a monovalent metal and bivalent metal; ammonia; and an organic amine may be preferably used; and hydroxides of monovalent metals, such as sodium hydroxide and potassium hydroxide can be particularly preferably used.

The weight average molecular weight of the polycarboxylic acid-based polymer (A) and the polycarboxylic acid-based polymer (B), as essential components according to the present invention, is preferably, as weight average molecular weight (Mw) as reduced to polyethylene glycol by gel permeation chromatography (hereinafter referred to as "GPC"), in the range of 3,000 to 100,000, more preferably 5, 000 to 80, 000, and further preferably 7, 000 to 40,000. In the present specification, a weight average molecular weight of a polymer is referred to as a value measured under the following GPC measurement conditions unless otherwise specified.

### [Measurement conditions of molecular weight with GPC]

Column used: TSK guard column SWXL + TSKgel G4000SWXL + G3000SWXL + G2000SWXL produced from Tosoh Corp.

Elution solution: An elution solution to be obtained by dissolving 115. 6 g of sodium acetate trihydrate in a mixed solvent of 10999 g of water and 6001 g of acetonitrile, and adjusting the resultant solution at pH of 6.0 with acetic acid is used.
Injection volume: 100 µL of a 0.5% elution solution
Eluting solution flow rate: 0.8 mL/min
Column temperature: 40°C
Standard substance: Polyethylene glycol with a peak top molecular weight (Mp) of 272500, 219300, 85000, 46000, 24000, 12600, 4250, 7100 and 1470.
Order of a calibration line: Third order equation
Detector: 410 differential refractive index detector produced from Nippon Waters K.K.
Analysis software: MILLENNIUM Ver. 3.21 produced from Nippon Waters K.K.

The cement admixture of the present invention preferably contains as an essential component the polycarboxylic acid-based polymer obtained by the method above. It is preferably in an aqueous solution form in view of handling. Further, other additives may be contained in the cement admixture of the present invention, or other additives can be added on mixing the present cement admixture with cement. As the other additives, well-known additives for cement can be used, for example, the following ones may be included:
(a) Water soluble polymer substance: unsaturated carboxylic acid polymers such as polyacrylic acid (sodium salt thereof), polymethacrylic acid (sodium salt thereof), polymaleic acid (sodium salt thereof), sodium salt of acrylic acid-maleic acid copolymer; polyoxyethylene or polyoxypropylene polymers such as polyethylene glycol and polypropyleneglycol or copolymers thereof; nonionic cellulose ethers such as methylcellulose, ethylcellulose, hydroxymethylcellulose, hydroxyethylcellulose, carboxymethylcellulose, carboxyethylcellulose and hydroxypropylcellulose; polysaccharides produced by microbial fermentation such as yeast glucan, xanthan gum and β-1, 3-glucans (they may be any of straight or branched types, such as curdlan, paramylon, pachyman, scleroglucan and laminaran); polyacrylamide; polyvinyl alcohol; starch; sodium starch phosphate; sodium alginate; gelatin; copolymers of acrylic acid having an amino group in its molecule and quaternary compounds thereof, and the like.
(b) Polymer emulsion: Copolymers of various vinyl monomers such as an alkyl (meth)acrylate, and the like.
(c) Retardant: oxycarboxylic acids and salts thereof, such as gluconic acid, glucoheptonic acid, arabonic acid, malic acid or citric acid, and inorganic and or organic salts thereof such as sodium, potassium, calcium, magnesium, ammonium and triethanol amine salts; oligosaccharides such as monosaccharides, disaccharides, and trisaccharides, like glucose, fluctose, galactose, saccharose, xylose, apiose, ribose, isomerized saccharide, or oligosaccharides such as dextrin, or polysaccharides such as dextran, saccharides such as saccharide syrup containing these saccharide; sugar alcohols such as sorbitol; magnesium fluorosilicate; phosphoric acid and salts thereof or borates; amino carboxylic acids and salts thereof; alkali-soluble proteins; humic acid; tannic acid; phenol; polyvalent alcohols such as glycerin; phosphonic acids and derivatives thereof such as aminotri(methylenephosphonic acid), 1-hydroxyethylidene-1,1-diphosphonic acid, ethylenediamine tetra(methylenephosphonic acid), diethylenetriamine penta(methylenephosphonic acid), and alkaline metal salts and alkaline earth metal salts thereof, and the like.
(d) Early strengthening agent and accelerator: soluble calcium salts such as calcium chloride, calcium nitrite, calcium nitrate, calcium bromide and calcium iodide; chlorides such as ferric chloride, magnesium chloride; sulfates; potassium hydroxide; sodium hydroxide; carbonates; thiosulfates; formic acid and formates such as calcium formate; alkanolamine; alumina cement; calcium aluminate silicate, and the like.
(e) Mineral oil-based antifoaming agent: kerosene, liquid paraffin, and the like.
(f) Fat and oil-based antifoaming agent: animals and plants oil, sesame oil, castor oil and alkyleneoxide adducts thereof, and the like.
(g) Fatty acid-based antifoaming agent: oleic acid, stearic acid, and alkyleneoxide adducts thereof, and the like.
(h) Fatty acid ester-based antifoaming agent: glycerin monoricinoleate, alkenyl succinic acid derivatives, sorbitol monolaurate, sorbitol trioleate, natural wax, and the like.
(i) Oxyalkylene-based antifoaming agent: polyoxyalkylenes such as (poly)oxyethylene (poly)oxypropylene adducts; (poly)oxyalkyl ethers such as diethyleneglycol heptylether, polyoxyethylene oleylether, polyoxypropylene butylether, polyoxyethylene polyoxypropylene 2-ethylhexylether, adducts of oxyethylene oxypropylene to higher alcohols having 12 to 14 carbon atoms; (poly)oxyalkylene (alkyl) arylether such as polyoxypropylene phenylether and polyoxyethylene nonylphenylether; acetylene ethers produced by addition polymerization of alkylene oxide to acetylene alcohols such as 2,4,7,9-tetramethyl-5-decyn-4,7-diol, 2,5-dimethyl-3-hexyn-2,5-diol and 3-methyl-1-butyn-3-ol; (poly) oxyalkylene fatty acid esters such as diethyleneglycol oleate, diethyleneglycol laurate and ethyleneglycol distearate; (poly) oxyalkylene sorbitan fatty acid esters such as polyoxyethylene sorbitan monolaurate and polyoxyethylene sorbitan trioleate; (poly)oxyalkylene alkyl(aryl)ether sulfate such as polyoxypropylene methylether sodium sulfate and polyoxyethylene dodecylphenolether sodium sulfate; (poly) oxyalkylene alkyl phosphate such as (poly) oxyethylene stearyl phosphate; (poly)oxyalkylene alkylamines such as polyoxyethylene laurylamine; polyoxyalkylene amides, and the like.
(j) Alcohol-based antifoaming agent: octyl alcohol, hexadecyl alcohol, acetylene alcohol, glycols, and the like.
(k) Amide-based antifoaming agent: acrylate polyamine, and the like.
(l) Phosphate ester-based antifoaming agent: tributyl phosphate, sodium octyl phosphate, and the like.
(m) Metal soap-based antifoaming agent: aluminum stearate, calcium oleate, and the like.
(n) Silicone-based antifoaming agent: dimethylsilicone oil, silicone paste, silicone emulsion, organic modified polysiloxanes (polyorganosiloxanes such as dimethylpolysiloxane), fluorosilicone oil, and the like.
(o) AE agent: resin soap, saturated or unsaturated fatty acids, sodium hydroxystearate, lauryl sulfate, ABS (alkyl benzene sulfonate), LAS(linear alkylbenzene sulfonate), alkane sulfonate, polyoxyethylene alkyl(phenyl)ether, polyoxyethylene alkyl(phenyl)ether sulfuric acid ester or salt thereof, polyoxyethylene alkyl(phenyl)ether phosphoric acid ester or salt thereof, protein material, alkenyl sulfosuccinate, α-olefin sulfonate, and the like.
(p) Other surfactants: polyalkylene oxide derivatives produced by addition of 10 or more moles of alkylene oxide such as ethylene oxide and propylene oxide to a monovalent aliphatic alcohol having 6 to 30 carbon atoms in its molecule such as octadecyl alcohol and stearyl alcohol, a monovalent alicyclic alcohol having 6 to 30 carbon atoms in its molecule such as abietyl alcohol, a monovalent mercaptane having 6 to 30 carbon atoms in its molecule such as dodecyl mercaptane, an alkylphenol having 6 to 30 carbon atoms in its molecule such as nonylphenol, an amine having 6 to 30 carbon atoms in its molecule such as dodecylamine, or a carboxylic acid having 6 to 30 carbon atoms in its molecule such as lauric acid or stearic acid; alkyldiphenylether sulfonates with ether linkage of two phenyl groups having a sulfone group which may have an alkyl group or an alkoxy group as a substituent; various anionic surfactants; various cationic surfactants such as alkylamine acetate and alkyltrimethylammonium chloride; various nonionic surfactans; various ampholytic surfactants, and the like.
(q) Water-proof agent: fatty acid (salt), fatty acid ester, oil and fat, silicone, paraffin, asphalt, wax, and the like.
(r) Anticorrosion agent: nitrite, phosphate, zinc oxide, and the like.
(s) Crack reducing agent: polyoxyalkyl ethers; alkane diols such as 2-methyl-2,4-pentanediol, and the like.
(t) Expanding material: ettringite-based or coal-based ones, and the like.

As other well-known cement additives (materials), a cement wetting agent, a thickener, a material separation reducing agent, a flocculating agent, a drying shrinkage reducing agent, a reinforcing agent, a self-leveling agent, an anticorrosion agent, a colorant, a fungicide, blast furnace slug, fly ash, cinder ash, clinker ash, husk ash, silica fume, silica powder, gypsum, and the like may be included. These well-known cement additives (materials) may be used singly or in a combination of two or more members.

Furthermore, a well-known cement dispersing agent can be used in combination in a cement admixture of the present invention, and for example the following cement dispersing agents can be used:

Lignin sulfonic acid salts; polyol derivatives; naphthalene sulfonic acid-formalin condensates; melamine sulfonic acid-formalin condensates; polystyrene sulfonic acid salts; amino sulfonic acids such as aminoaryl sulfonic acid-phenol-formaldehyde condensates as described in JP-A-1-113419; cement dispersing agents containing as an (a) component a copolymer of a polyalkylene glycol mono(meth)acrylate-based compound and a (meth)acrylic acid-based compound, and/or salts thereof, as a (b) component a copolymer of a polyalkylene glycol mono(meth)allyl ether-based compound and maleic anhydride, and/or hydrolysates thereof, and/or salts thereof, and as a (c) component a copolymer of a polyalkylene glycol mono(meth)allyl ether-based compound and a maleate of a polyalkylene glycol-based compound, and/or salts thereof as described in JP-A-7-267705; concrete admixtures comprising as an A component a copolymer of polyalkylene glycol (meth) acrylate and (meth) acrylic acid (salt), as a B component a specific polyethylene glycol polypropyleneglycol-based compound, and as a C component a specific surfactant as described in Japanese Patent No.2508113; a copolymer of polyethylene(propylene) glycol (meth)acrylate or polyethylene (propylene) glycol mono(meth)allyl ether, (meth)allyl sulfonic acid (salt) and (meth)acrylic acid (salt) as described in JP-A-62-216950; a copolymer of polyethylene(propylene) glycol (meth)acrylate, (meth)allyl sulfonic acid (salt) and (meth)acrylic acid (salt) as described in JP-A-1-226757; a copolymer of polyethylene(propylene) glycol (meth)acrylate, (meth)allyl sulfonic acid (salt) or p- (meth) allyoxybenzene sulfonic acid (salt) and (meth)acrylic acid (salt) as described in JP-B-5-36377; a copolymer of polyethylene glycol mono (meth) allyl ether and maleic acid (salt) as described in JP-A-4-149056; a copolymer of polyethylene glycol (meth)acrylate, (meth)allyl sulfonic acid(salt), (meth)acrylic acid (salt), alkanediol mono(meth)acrylate, polyalkylene glycol mono(meth)acrylate, and an α,β-unsaturated monomer having an amide group in its molecule as described in JP-A-5-170501; a copolymer of polyethylene glycol mono(meth)allyl ether, polyethylene glycol mono(meth)acrylate, alkyl (meth)acrylate, (meth)acrylic acid (salt) and (meth)allyl sulfonic acid (salt) or p-(meth)allyloxybenzene sulfonic acid (salt) as described in JP-A-6-191918; a copolymer of alkoxypolyethylene glycol monoallyl ether and maleic anhydride or hydrolysates therreof, or salts thereof, as described in JP-A-5-43288; a copolymer of polyethylene glycol monoallyl ether, maleic acid, and a copolymerizable monomer with these monomers, or salts or esters thereof as described in JP-B- 58-38380.

A copolymer of a polyalkylene glycol mono(meth)acrylate-based monomer, a (meth)acrylic acid-based monomer, and a copolymerizable monomer with these monomers as described in JP-B-59-18338; a copolymer of a (meth)acrylate ester having a sulfone group and optionally a copolymerizable monomer with this monomer, or salts thereof as described in JP-A-62-119147; an esterified product between a copolymer of alkoxypolyalkylene glycol monoallyl ether and maleic anhydride, and a polyoxyalkylene derivative having an alkenyl group at the terminal, as described in JP-A-6-271347; an esterified product between a copolymer of alkoxypolyalkylene glycol monoallyl ether and maleic anhydride, and a polyoxyalkylene derivative having a hydroxyl group at the terminal, as described in JP-A-6-298555; and a copolymer of an alkenyl ether-based monomer having ethylene oxide added to a specified unsaturated alcohol such as 3-methyl-3-buten-1-ol, an unsaturated carboxylic acid-based monomer and a copolymerizable monomer with these monomers, or polycarboxylic acids (salts) such as the salts thereof, as described in JP-A- 62-68806. These cement dispersing agents may be used singly or in a combination of two or more members.

As other well-known cement additives (materials), a cement wetting agent, a thickener, a material separation reducing agent, a flocculating agent, a drying shrinkage reducing agent, a reinforcing agent, a self-leveling agent, an anticorrosion agent, a colorant, a fungicide, and the like may be included. These well-known cement additives (materials) may be used singly or in a combination of two or more members.

In the cement composition, as particularly suitable embodiments of components other than cement and water, the following (1) to (7) may be included:
(1) A combination essentially comprising two components, <1> a cement admixture of the present invention and <2> an oxyalkylene-base antifoaming agent. As the oxyalkylene-base antifoaming agent, polyoxyalkylenes, polyoxyalkylene alkyl ethers, polyoxyalkylene acetylene ethers and polyoxyalkylene alkyl amines, and the like can be used, and polyoxyalkylene alkyl amines may be particularly advantageously used. As formulation weight ratio of <2> the oxyalkylene-base antifoaming agent, 0.01 to 20% by weight based on <1> the cement admixture is preferable.
(2) A combination essentially comprising three components, <1> a cement admixture of the present invention, <2> an oxyalkylene-base antifoaming agent and <3> an AE agent. As the oxyalkylene-base antifoaming agent, polyoxyalkylenes, polyoxyalkylene alkyl ethers, polyoxyalkylene acetylene ethers and polyoxyalkylene alkyl amines, and the like can be used, and polyoxyalkylene alkyl amines particularly advantageously used. While as the AE agent, resin acid soap, alkyl sulfates, alkyl phosphates can be particularly advantageously used. As formulation weight ratio between <1> the cement admixture and <2> the antifoaming agent, 0.01 to 20% by weight based on <1> the cement admixture is preferable. On the other hand, as formulation weight ratio of <3> the AE agent, 0. 001 to 2% by weight based on cement is preferable.
(3) A combination essentially comprising three components, <1> a cement admixture of the present invention and <2> a copolymer of a polylakyleneglycol mono(meth)acrylate-based monomer having a polyoxyalkylene chain added with 2 to 300 moles of an alkylene oxide in average, having 2 to 18 carbon atoms, a (meth) acrylic acid-basedmonomer and a monomer copolymerizable with these monomers (as described in JP-B-59-18338, JP-A-7-223852 and JP-A-9-241056), and <3> an oxyalkylene-based antifoaming agent. As formulation weight ratio between <1> the cement admixture and <2> the copolymer, a range of 5/95 to 95/5 is preferable and a range of 10/99 to 90/10 is more preferable. As formulation weight ratio of <3> the oxyalkylene-based antifoaming agent, a range of 0.01 to 20% by weight based on by total weight of <1> the cement admixture and <2> the copolymer is preferable.
(4) A combination essentially comprising two components, <1> a cement admixture of the present invention and <2> a retardant. As the retardant, oxycarboxylic acids such as gluconic acid (salt), citric acid (salt); saccharides such as glucose; sugar alcohols such as sorbitol; and phosphonic acids such as aminotri (methylenephosphonic acid) can be used. As formulation weight ratio between <1> the cement admixture and <2> the retardant, a range of 50/50 to 99.9/0.1 is preferable and a range of 70/30 to 99/1 is more preferable as weight ratio between the copolymer (A) and/or the copolymer (B) and <2> the retardant.
(5) A combination essentially comprising two components, <1> a cement admixture of the present invention and <2> an accelerator. As the accelerator, soluble calcium salts such as calcium chloride, calcium nitrite and calcium nitrate; chlorides such as iron chloride and magnesium chloride; thiosulfuric acid salts, formic acid, and formate salts such as calcium formate can be used. As formulation weight ratio between <1> the cement admixture and <2> the accelerator, 10/90 to 99.9/0.1 is preferable and 20/80 to 99/1 is more preferable.
(6) A combination essentially comprising two components, <1> a cement admixture of the present invention and <2> a material separation reducing agent. As the material separation reducing agent, various thickeners such as nonionic cellulose ethers and compounds having, as partial structure, a hydrophobic substituent having a hydrocarbon chain with 4 to 30 carbon atoms and a polyoxyalkylene chain added with 2 to 300 alkylene oxides with carbon atoms of 2 to 18, as average adduct mole number, can be used. As formulation weight ratio between <1> the cement admixture and <2> the material separation reducing agent, 10/90 to 99.99/0.01 is preferable and 50/50 to 99.9/0.1 is more preferable. A cement composition of this combination is suitable as high flow concrete, self-filling concrete and self-leveling material.
(7) A combination essentially comprising two components, <1> a cement admixture of the present invention and <2> a sulfonic acid-based dispersing agent having a sulfonic acid group in its molecule. As the sulfonic acid-based dispersing agent, a dispersing agent based on lignin sulfonate salts, condensates of naphthalene sulfonic acid-formalin, condensates of melamine sulfonic acid-formalin, polystyrene sulfonate salts and aminosulfonic acid-based dispersing agents such as condensates of aminoaryl sulfonic acid-phenol-formaldehyde can be used. As formulation weight ratio between <1> the cement admixture and <2> the sulfonic acid-based dispersing agent having a sulfonic acid group in the molecule, 5/95 to 95/5 is preferable and 10/90 to 90/10 is more preferable as weight ratio between <1> the cement admixture and <2> the sulfonic acid-based dispersing agent having a sulfonic acid group in the molecule.

A cement admixture of the present invention can be used by being added in a cement composition such as cement paste, mortar, concrete, and the like, similarly as in a well-known cement admixture. In addition, it can also be applied to ultrahigh strength concrete. As the cement composition, normally used substances such as cement, water, fine aggregate or coarse aggregate can be suitably used. Also compositions added with fine powder such as fly ash, blast furnace slag, silica fume and limestone may be used. In this connection, "ultrahigh strength concrete" means one generally so called in a cement composition field, namely, such concrete whose hardened material manifests strength equivalent or higher as compared with conventional cement, even when water/cement ratio is reduced. For example, it is referred to as concrete having workability not to impair usual use, even when water/cement ratio is not higher than 25% by mass, further not higher than 20% by mass, in particular not higher than 18% by mass, in particular not higher than 14% by mass and in particular not higher than 12% by mass, and whose hardened material has a compression strength of not lower than 60 N/mm², further not lower than 80 N/mm², more further not lower than 100 N/mm², particularly not lower than 120 N/mm², particularly not lower than 160 N/mm² and particularly not lower than 200 N/mm².

As cement which is used in a cement admixture of the present invention, Portland cement (normal, high early strength, ultra high early strength, moderate heat, sulfate resistant and each low alkali type thereof), various mixed cement (blast furnace slag cement, silica cement, fly ash cement), white Portland cement, alumina cement, ultra fast-cure cement (1 clinker fast-cure cement, 2 clinkers fast-cure cement, magnesium phosphate cement), grout cement, oil well cement, low heat cement (low heat type blast furnace slag cement, fly ash mixed low heat type blast furnace slag cement, Blite-rich cement), ultra high strength cement, cement-based solidification material and eco-cement (cement produced from one or more kinds of municipal solid waste incinerated ash and sewage sludge incinerated ash as raw material) can be suitably used. Further, fine powder such as blast furnace slug, fly ash, cinder ash, clinker ash, husk ash, silica fume, silica powder and limestone, or gypsum may be added. As the aggregate, in addition to pebble, crushed stone, water granulation slug and regenerated aggregate, etc., refractory aggregates such as silica-based, clay-based, zirconium-based, high alumina-based, silicon carbide-based, graphite-based, chrome-based, chrome-magnesite-based and magnesia-based materials can be used. As formulation amount of the cement per 1 m³ concrete and unit water amount, for example, to produce highly durable and high strength concrete, a unit water amount of 100 to 185 kg/cm³, a used amount of cement of 250 to 800 kg/m³ and a water/cement ratio (mass ratio) of 0.1 to 0.7 is preferable; and a unit water amount of 120 to 175 kg/cm³, a used amount of cement of 270 to 800 kg/m³ and a water/cement ratio (mass ratio) of 0.2 to 0.65 are is more preferably preferable. The cement composition has a wide range from lean mix to rich mix can be used, which are effective to any of high strength concrete with high content of unit cement amount, and lean mix concrete with a unit cement amount of not higher than 300 kg/m³.

As formulation rate of a cement admixture of the present invention in a cement composition, for example, when it is used to mortar or concrete with hydraulic cement, total weight of the polycarboxylic acid-based polymer (A) and the polycarboxylic acid-based polymer (B), as the essential components of the present invention, is preferably not lower than 0.01% by weight and not higher than 10% by weight, based on 100% by weight of total cement weight. The formulation rate below 0.01% by weight would be insufficient in view of performance, while the formulation rate over 10% by weight would be disadvantageous in view of economy. The formulation rate is more preferably not lower than 0.05% by weight and not higher than 8% by weight, and further more preferably not lower than 0.1% by weight and not higher than 5% by weight. The "% by weight" is a corresponding value to solid content.

### Examples

The present invention will be explained in more detail below by means of Examples, however, the present invention is by no means limited only to these Examples. "%" means "% by weight" unless other wise specified.

### (Measurement method for weight average molecular weight of polymer)

Column used: TSK guard column SWXL + TSKgel G4000SWXL + G3000SWXL + G2000SWXL produced from Tosoh Corp.
Elution solution: An elution solution to be obtained by dissolving 115. 6 g of sodium acetate trihydrate in a mixed solvent of 10999 g of water and 6001 g of acetonitrile, and adjusting the resultant solution at pH of 6.0 with acetic acid is used.
Injection volume: 100 µL of a 0.5% elution solution
Eluting solution flow rate: 0.8 mL/min
Column temperature: 40°C
Standard substance: Polyethylene glycol with a peak top molecular weight (Mp) of 272500, 219300, 85000, 46000, 24000, 12600, 4250, 7100 and 1470.
Order of a calibration line: Third order equation
Detector: 410 differential refractive index detector produced from Nippon Waters K.K.
Analysis software: MILLENNIUM Ver. 3.21 produced from Nippon Waters K.K.

### (Production Example 1)

Adduct compound of 20 moles of ethylene oxides to vinyl ether (hereinafter referred to as VE-20) was synthesized from diethyleneglycol monovinylether (DEGV) produced from CHEMIWAY Maruzen Petrochemical Co., Ltd. by a well-known method. Into a container equipped with a temperature controller, a stirring blade and a nitrogen introducing port, 163.4 g of an aqueous 65% by weight solution of VE-20 was charged, and temperature of the solution was set to 29°C. Under nitrogen flow into the container at 100 ml/min, 20.3 g of an aqueous 70% by weight solution of acrylic acid was dropped over 1.5 hours, and 21.2 g of an aqueous solution of hydrogen peroxide at a concentration of 4% by mol/monomer, and 44.9 g of an aqueous solution having 1.5% by mol/monomer of β-mercaptopropionic acid and 1% by mol/monomer of L-ascorbic acid dissolved therein, were dropped over 1.75 hours. After 1. 75 hours from the start, the solution was aged for 30 minutes. Reaction temperature was controlled at 27 to 30°C during the reaction.

A solid content of the resulting polycarboxylic acid-based polymer (A-1) was 50%. The molecular weight of this polymer was determined by GPC using a sample with concentration adjusted to 0.5% by the addition of a GPC eluting solution. As a result, two large GPC peaks appeared, the peak (polymer peak) at Mp 34,560 and the peak (non-polymer peak) at Mp 1, 180 were separated by the lowest layer of the valley part formed between these two peaks. In this case, attention was paid so as that the peak at Mp 1, 180 did not include minus peak. A ratio of area of the non-polymer peak/area of the polymer peak was found to be 23.5%.

### (Production Example 2)

### [Production of polycarboxylic acid-based polymer (B-1)]

Into a reactor equipped with a thermometer, a stirrer, a dropping apparatus, a nitrogen introducing port and a condenser, 995 parts of distilled water was charged, and temperature was raised to 70°C. Subsequently, a solution prepared by mixing 1067 parts of a monomer (b-1) shown in Table 1, 283 parts of methacrylic acid, 41.2 parts of a 48% aqueous solution of sodium hydroxide, 20 parts of 3-mercaptopropionic acid and 354 parts of distilled water, was dropped over 5 hours, and 240 parts of a 6.5% aqueous solution of ammonium persulfate was dropped over 6 hours. After completion of the dropping, the reaction mixture was kept at 70°C for 1 hour. After cooling the solution, a 30% aqueous solution of sodium hydroxide was added to adjust to a pH of 7, to obtain an aqueous solution of a polycarboxylic acid-based polymer (B-1) (a solid content concentration of 45% by weight) having weight average molecular weight of 14, 000 determined by GPC as reduced to polyethylene glycol.

**Table 1**

| Monomer | Structural formula or explanation |
|---|---|
| Monomer (b-1) | CH₂=C (CH₃)CO-(OC₂H₄)₆-OCH₃ |
| Monomer (b-2) | Compound having 1.5 moles of glycidyl methacrylate added to 1 mol of a polyalkyleneimine alkylene oxide adduct having 3 moles of ethylene oxide (EO) to 1 equivalent of activated hydrogen (-NH) derived from an amino group of polyethylene imine (Mw=600) |
| Monomer (b-3) | CH₂=C(CH₃)CO- (OC₂H₄)₃-(OC₃H₆)₁-(OC₂H₄)₆-OCH₃ |

### (Production Example 3)

### [Production of polycarboxylic acid-based polymer (B-2)]

Into a reactor equipped with a thermometer, a stirrer, a dropping apparatus, a nitrogen introducing port and a condenser, 695.5 parts of distilled water was charged, and temperature was raised to 70°C. Subsequently, a solution prepared by mixing 1244.6 parts of a monomer (b-1) shown in Table 1, 330.4 parts of methacrylic acid, 76.1 parts of a 30% aqueous solution of sodium hydroxide, 34.6 parts of 3-mercaptopropionic acid and 368.6 parts of distilled water, was dropped over 5 hours, and 240 parts of a 2.4% aqueous solution of hydrogen peroxide was dropped over 6 hours, and 245 parts of a 3.1% aqueous solution of L-ascorbic acid was dropped over 6 hours. After completion of the dropping, the reaction mixture was kept at 70°C for 1 hour. After cooling the solution, a 30% aqueous solution of sodium hydroxide was added to adjust to pH of 7, to obtain an aqueous solution of a polycarboxylic acid-based polymer (B-2) (a solid content concentration of 45% by weight) having weight average molecular weight of 8,500 determined by GPC as reduced to polyethylene glycol.

### (Production Example 4)

### [Production of polycarboxylic acid-based polymer (B-3)]

Into a glass reaction apparatus equipped with a thermometer, a stirrer, a dropping apparatus, a nitrogen introducing tube and a reflux condenser, 344 parts of water was charged, and after nitrogen purging in the reaction apparatus under stirring, temperature was raised to 70°C under nitrogen atmosphere. An aqueous monomer solution prepared by mixing 1076 parts of methoxypolyethylene glycol monomethacrylate (average adduct mole number of ethylene oxide: 4), 190 parts of methacrylic acid, 754.6 parts of a 43% aqueous solution of a monomer (b-2) shown in Table 1, 21.7 parts of a 48% aqueous solution of sodium hydroxide, 44.6 parts of 3-mercaptopropionic acid and 287 parts of distilled water, was dropped over 5 hours, and each of 240 parts of a 2.0% aqueous solution of hydrogen peroxide and 240 parts of a 5% aqueous solution of L-ascorbic acid was dropped over 6 hours. Then, by maintaining the solution temperature at 70°C for another 1 hour, polymerization was completed to obtain an aqueous solution of a polycarboxylic acid-based polymer (B-3) (a solid content concentration of 55.7% by weight) having weight average molecular weight of 10,000.

### (Production Example 5)

### [Production of polycarboxylic acid-based polymer (B-4)]

Into a glass reaction apparatus equipped with a thermometer, a stirrer, a dropping apparatus, a nitrogen introducing tube and a reflux condenser, 573.5 parts of water was charged, and after nitrogen purging in the reaction apparatus under stirring, temperature was raised to 60°C under nitrogen atmosphere. Subsequently, an aqueous monomer solution prepared by mixing 545.7 parts of a monomer (b-3) shown in Table 1, 108.0 parts of methacrylic acid, 11.8 parts of a 48% aqueous solution of sodium hydroxide, 9.76 parts of 3-mercaptopropionic acid and 148. 6 parts of distilled water, was dropped over 4 hours, and each of 50 parts of a 3.7% aqueous solution of hydrogen peroxide, and 50 parts of a 4.7% aqueous solution of L-ascorbic acid was dropped over 5 hours. Then, by maintaining the solution temperature at 60°C for another 1 hour, polymerization was completed to obtain an aqueous solution of a polycarboxylic acid-based polymer (B-4) (a solid content concentration of 45% by weight) having weight average molecular weight of 13,100.

### (Examples 1 to 3)

By mixing a polycarboxylic acid-based polymer (A-1) produced in Production Example 1, polycarboxylic acid-based polymers (B-1) to (B-4) produced in Production Examples 2 to 5, and cement admixtures (A) and (B) having structure shown in Table 2, in formulations shown in Table 3, a cement admixtures (1) to (3) of the present invention were obtained. Using these cement admixtures (1) to (3) of the present invention, a concrete test was carried out, to evaluate an addition amount, and changes in slump and slump flow over time. The results are shown in Table 4.

### (Comparative Example 1)

Using a comparative cement admixture (1) composed of only a polycarboxylic acid-based polymer (A-1) produced in Production Example 1, a concrete test was carried out, to evaluate an addition amount, and changes in slump and slump flow over time. The results are shown in Table 4.

### (Comparative Example 2)

Using a comparative cement admixture (2) composed of only a polycarboxylic acid-based polymer (B-1) produced in Production Example 2, a concrete test was carried out, to evaluate an addition amount, and changes in slump and slump flow over time. The results are shown in Table 4.

### (Comparative Example 3)

Using a comparative cement admixture (3) composed of only a polycarboxylic acid-based polymer (B-2) produced in Production Example 3, a concrete test was carried out, to evaluate an addition amount, and changes in slump and slump flow over time. The results are shown in Table 4.

In the Examples 1 to 3 and the Comparative Examples 1 to 3, the concrete test was carried out in accordance with the following method.

### [Concrete test method]

Using cement admixtures shown in Examples 1 to 3 and Comparative Example 1, concrete was blended and mixed with the following formulation, to evaluate addition amounts of a cement admixture to attain a specified slump flow value, along with slump values and slump flow values just after mixing (namely after 0 minute), 30 minutes after mixing and 60 minutes after mixing.

### (Formulation of concrete)

Formulation unit quantity was as follows: Water 175 kg/m³, cement 389 kg/m³, coarse aggregate 941 kg/m³ and fine aggregate 791 kg/m³.

MA404 (produced from Pozzolith Bussan Co., Ltd.), as an antifoaming agent, was blended so as to be 0.003% based on cement weight.

Cement: The following three members were mixed in a weight ratio of 1:1:1 and used.

Ordinary Portland cement produced from Ube-Mitsubishi Cement Corp.

Ordinary Portland cement produced from Sumitomo Osaka Cement Co., Ltd. and

Ordinary Portland cement produced from Taiheiyo Cement Co., Ltd.

Coarse aggregate: Crushed limestone produced in Hachinohe, Aomori prefecture

Fine aggregate: Pit sand produced in Kimitsu, Chiba prefecture

MA404 (produced from Pozzolith Bussan Co., Ltd.), as an antifoaming agent, was blended so as to be 0.005% based on cement weight.

Formulation quantity of a cement admixture based on cement weight was calculated as solid content of a cement admixture and shown in Table 4 in % (% by weight).

### (Concrete production condition)

Cement, fine aggregate and coarse aggregate were charged in the formulation above, into a 50 L forced mixer, and subjected to dry blending for 10 seconds and subsequent mixing by the addition of water formulated with a cement admixture, for further 120 seconds to produce concrete.

### (An evaluation method and an evaluation standard)

Slump value and slump flow value of the resultant concrete were measured in accordance with Japanese Industrial Standards (JIS A1101, 1128 and 6204).

**Table 2**

| Cement admixture | Structural formula or explanation |
|---|---|
| Cement admixture (A) | Polyalkylene imine alkylene oxide adduct having 3 moles of ethylene oxides added to 1 equivalent ofactivatedhydrogen (-NH) derivedfromanamino group of polyethylene imine (Mw = 1800) |
| Cement admixture (B) | Polyalkylene imine alkylene oxide adduct having 3 moles of ethylene oxides, and then 6 moles of propylene oxide and further 17 moles of ethylene oxide added to 1 equivalent of activated hydrogen (-NH) derived from an amino group of polyethylene imine (Mw = 600) |

**Table 3**

| Cement Admixture No. | (A-1) | (B-1) | (B-2) | (B-3) | (B-4) | (A) | (B) |
|---|---|---|---|---|---|---|---|
| Example 1 | 30.0 | 42.6 | - | 13.7 | - | 13.7 | - |
| Example 2 | 30.0 | - | 70.0 | - | - | - | - |
| Example 3 | 30.0 | - | - | - | 60.0 | - | 10.0 |
| Comparative Example 1 | 100.0 | - | - | - | - | - | - |
| Comparative Example 2 | - | 100.0 | - | - | - | - | - |
| Comparative Example 3 | - | - | 100.0 | - | - | - | - |

**Table 4**

| | Amount of admixture added (% based on cement weight) | Slump value (cm), Slump flow value (mm) | | |
|---|---|---|---|---|
| | | 0 min. after mixing | 30 min. after mixing | 60 min. after mixing |
| Example 1 | 0.190 | 22.5, 393 | 21.0, 315 | 19.5, 305 |
| Example 2 | 0.205 | 23.0, 400 | 21.0, 330 | 19.5, 315 |
| Example 3 | 0.155 | 23.5, 413 | 20.0, 315 | 19.0, 298 |
| Comparative Example 1 | 0.165 | 23.0, 410 | 18.5, 290 | 13.5, 245 |
| Comparative Example 2 | 0.215 | 22.5, 408 | 21.5, 320 | 19.0, 278 |
| Comparative Example 3 | 0.300 | 22.5, 395 | 22.0, 320 | 19.5, 295 |

### (Evaluation results)

It is noted from the results shown in Table 4 that concrete samples using cement admixtures (1) to (3) of the present invention used in Examples 1 to 3 all enabled to disperse and fluidize cement till specified slump flow value is attained, in an smaller addition amount and showed superior water-reducing performance, as compared with comparative concrete samples using cement admixtures (1) and (3) used in Comparative Examples 2 to 3. In addition, the present concrete samples showed smaller decrease in slump value and slump flow value at 30 minutes and 60 minutes after mixing, and thus found little fluidity deterioration over time, as compared with comparative concrete samples using cement admixtures (1) and (2) used in Comparative Examples 1 and 2.

In addition, a cement admixture (2) of the present invention (Example 2) which comprises comparative cement admixtures (1) and (3) (Comparative Examples 1 and 3 respectively) in combination, shows small decrease in slump flow value at 60 minutes after mixing, even in a smaller amount of cement admixture than each the comparative cement admixtures (1) and (3) used in Comparative Examples 1 and 3. From these results, a cement admixture of the present invention is found to effectively suppress and prevent decrease in fluidity over time in a smaller amount. In this connection, the comparative cement admixture (1) used in Comparative Example 1 is a member of the polycarboxylic acid-based polymer (A) relevant to the present invention, and the comparative cement admixture (3) used in Comparative Example 3 is a member of the polycarboxylic acid-based polymer (B) relevant to the present invention. From these points and the results, it is shown that the combined use of the polycarboxylic acid-based polymer (A) and the polycarboxylic acid-based polymer (B) according to the present invention can significantly suppress and prevent decrease in fluidity over time in a smaller amount than that used singly. This result is considered to be brought about by the reason that by combining a polycarboxylic acid-based polymer (A) relevant to the present invention manifesting superior effects of reducing an amount with a polycarboxylic acid-based polymer (B) relevant to the present invention manifesting superior effects of suppressing and preventing decrease in fluidity over time in a specific ratio, the synergy effects by polycarboxylic acid-based polymers (A) and (B) are expressed, to satisfy both of conflicting effects, namely reduction of amount, and suppression and prevention of decrease in fluidity over time.

The cement admixture of the present invention has superior water-reducing performance, and at the same time, can suppress decrease in slump and slump flow caused by decrease in fluidity of a cement composition over time. Accordingly, by using the cement admixture of the present invention, a hardened cement material can efficiently be formed and produced, and thus it fulfills great role to build structure of civil engineering and construction with superior strength and durability.

## Claims

1. A cement admixture comprising two or more members of polycarboxylic acid-based polymers, wherein said cement admixture comprises at least one polycarboxylic acid-based polymer (A) having a constitutional unit represented by the following formula (1): 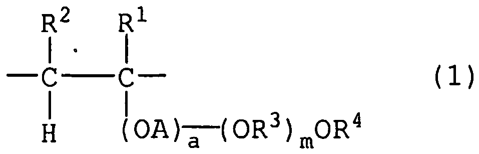 wherein R¹ and R² independently represent a hydrogen atom, an alkyl group with carbon atoms of 1 to 30, an alkenyl group with carbon atoms of 1 to 30, an aryl group with carbon atoms of 6 to 12; A represents an alkylene group with carbon atoms of 1 to 30 or an arylene group with carbon atoms of 6 to 12; a is 0 or 1; OR³ represents an oxyalkylene group with carbon atoms of 2 to 18, wherein each OR³ may be the same or different each other, provided that when OR³ is in a mixed form of two or more members, each OR³ may be added in a block or random form; R⁴ represents a hydrogen atom or a hydrocarbon group with carbon atoms of 1 to 30; and m represents an average mole number of oxyalkylene groups added and is in the range of 1 to 300; and
at least one polycarboxylic acid-based polymer (B) having a constitutional unit represented by the following formula (2): 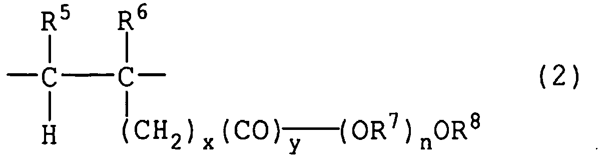 wherein R⁵ and R⁶ independently represent a hydrogen atom, a methyl group; x is an integer in the range of 0 to 2 and y is 1; OR⁷ represents an oxyalkylene group with carbon atoms of 2 to 18, wherein each OR⁷ may be the same or different each other, provided that when OR⁷ is in a mixed form of two or more members, each OR⁷ may be added in a block or random form; R⁸ represents a hydrogen atom or a hydrocarbon group with carbon atoms of 1 to 30; and n represents an average mole number of oxyalkylene groups added and is in the range of 1 to 300;
the polymer (A) isacopolymerofamonomer (a) represented by the following formula (4): 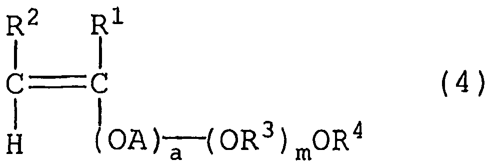 wherein in the formula (4), R¹, R², R³, R⁴, A, a, and m are as defined in the formula (1), and a monomer (c), wherein the monomer (c) is selected from the group consisting of an acrylic acid, a methacrylic acid, and, a monovalent metal salt, a bivalent metal salt, an ammonium salt and an organic amine salt thereof;
the polymer (B) is produced by copolymerization of a monomer (b) represented by the following formula (5): 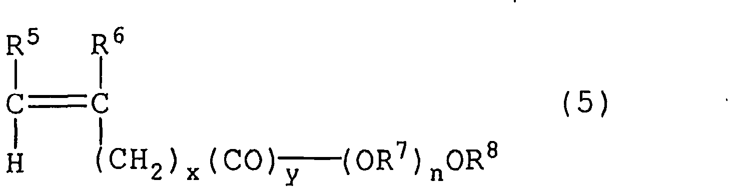 wherein in the formula (5), R⁵, R⁶, R⁷, R⁸, x, y and n are as defined in the formula (2), and a monomer (c), wherein the monomer (c) is selected from the group consisting of an acrylic acid, a methacrylic acid, and, a monovalent metal salt, a bivalent metal salt, an ammonium salt and an organic amine salt thereof,
wherein the monomer (c) for forming the polymer (A) and the monomer (c) for forming the polymer (B) are the same or different; and
the weight ratio of said polycarboxylic acid-based polymer (A) and said polycarboxylic acid-based polymer (B) [weight ratio of (A)/(B)] is in the range of 1/99 to 99/1.

2. A cement admixture of claim 1, wherein in the formula (2), n is in the range of 1 to 10.

3. A cement admixture of claim 1 or 2, wherein in the formula (2), OR⁷ is represented by the following formula (3): 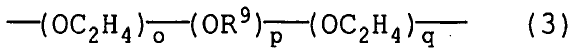 wherein R⁹ represents an alkylene group with carbon atoms of 3 to 18; o and q independently represent an average mole number of oxyalkylene groups added and is in the range of 0 to 200, provided that when either one of o or q is 0, the other is in the range of 1 to 200; p represents an average mole number of oxyalkylene groups added and is in the range of 1 to 50; and the total of number of o, p and q (o+p+q), is in the range of 2 to 300.

4. A cement admixture of any one of claims 1 to 3, wherein the weight ratio of said polycarboxylic acid-based polymer (A) and said polycarboxylic acid-based polymer (B) [weight ratio of (A)/(B)] is in the range of 1/99 to 90/10.

## Patentansprüche

1. Zementzusatzmittel, das zwei oder mehr Bestandteile von Polymeren auf Polycarbonsäurebasis umfasst, wobei das Zementzusatzmittel mindestens ein Polymer auf Polycarbonsäurebasis (A) mit einem Baustein, der durch die folgende Formel (1) dargestellt wird: 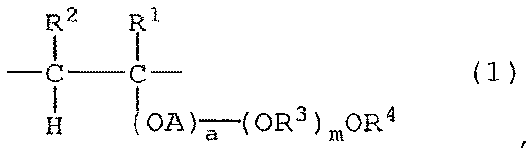 wobei R¹ und R² unabhängig für ein Wasserstoffatom, eine Alkylgruppe mit 1 bis 30 Kohlenstoffatomen, eine Alkenylgruppe mit 1 bis 30 Kohlenstoffatomen, eine Arylgruppe mit 6 bis 12 Kohlenstoffatomen stehen; A für eine Alkylengruppe mit 1 bis 30 Kohlenstoffatomen oder eine Arylengruppe mit 6 bis 12 Kohlenstoffatomen steht; a 0 oder 1 ist; OR³ für eine Oxyalkylengruppe mit 2 bis 18 Kohlenstoffatomen steht, wobei jedes OR³ gleich oder voneinander verschieden sein kann, vorausgesetzt, dass, wenn OR³ in einer Mischform von zwei oder mehr Bestandteilen vorliegt, jedes OR³ in einer Block- oder statistischen Form zugegeben werden kann; R⁴ für ein Wasserstoffatom oder eine Kohlenwasserstoffgruppe mit 1 bis 30 Kohlenstoffatomen steht und m für eine durchschnittliche Molzahl von zugegebenen Oxyalkylengruppen steht und im Bereich von 1 bis 300 liegt; und
mindestens ein Polymer auf Polycarbonsäurebasis (B) mit einem Baustein umfasst, der durch die folgende Formel (2) dargestellt wird: 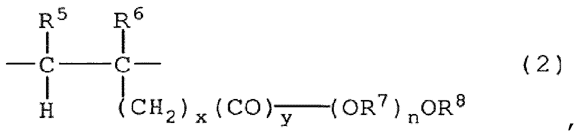 wobei R⁵ und R⁶ unabhängig für ein Wasserstoffatom, eine Methylgruppe stehen; x eine ganze Zahl im Bereich von 0 bis 2 ist und y 1 ist; OR⁷ für eine Oxyalkylengruppe mit 2 bis 18 Kohlenstoffatomen steht, wobei jedes OR⁷ gleich oder voneinander verschieden sein kann, vorausgesetzt, dass, wenn OR⁷ in einer Mischform von zwei oder mehr Bestandteilen vorliegt, jedes OR⁷ in einer Block- oder statistischen Form zugegeben werden kann; R⁸ für ein Wasserstoffatom oder eine Kohlenwasserstoffgruppe mit 1 bis 30 Kohlenstoffatomen steht und n für eine durchschnittliche Molzahl von zugegebenen Oxyalkylengruppen steht und im Bereich von 1 bis 300 liegt;
wobei das Polymer (A) ein Copolymer eines Monomers (a), das durch die folgende Formel (4) dargestellt wird: 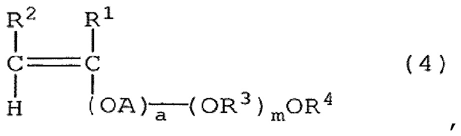 wobei in der Formel (4) R¹, R², R³, R⁴, A, a und m wie in der Formel (1) definiert sind, und eines Monomers (c) ist, wobei das Monomer (c) aus der Gruppe bestehend aus einer Acrylsäure, einer Methacrylsäure und einem einwertigen Metallsalz, einem zweiwertigen Metallsalz, einem Ammoniumsalz und einem organischen Aminsalz davon ausgewählt ist;
wobei das Polymer (B) durch Copolymerisation eines Monomers (b), das durch die folgende Formel (5) dargestellt wird: 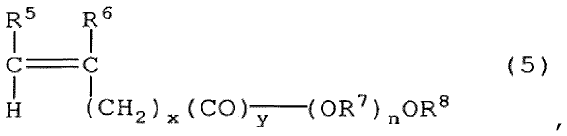 wobei in der Formel (5) R⁵, R⁶, R⁷, R⁸, x, y und n wie in der Formel (2) definiert sind, und eines Monomers (c) hergestellt wird, wobei das Monomer (c) aus der Gruppe bestehend aus einer Acrylsäure, einer Methacrylsäure und einem einwertigen Metallsalz, einem zweiwertigen Metallsalz, einem Ammoniumsalz und einem organischen Aminsalz davon ausgewählt ist;
wobei das Monomer (c) zum Bilden des Polymers (A) und das Monomer (c) zum Bilden des Polymers (B) gleich oder verschieden sind; und
wobei das Gewichtsverhältnis des Polymers auf Polycarbonsäurebasis (A) und des Polymers auf Polycarbonsäurebasis (B) [Gewichtsverhältnis von (A):(B)] im Bereich von 1:99 bis 99:1 liegt.

2. Zementzusatzmittel nach Anspruch 1, wobei in der Formel (2) n im Bereich von 1 bis 10 liegt.

3. Zementzusatzmittel nach Anspruch 1 oder 2, wobei in der Formel (2) OR⁷ durch die folgende Formel (3) dargestellt wird: 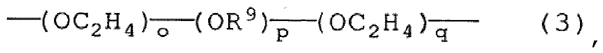 wobei R⁹ für eine Alkylengruppe mit 3 bis 18 Kohlenstoffatomen steht; o und q unabhängig für eine durchschnittliche Molzahl von zugegeben Oxyalkylengruppen stehen und im Bereich von 0 bis 200 liegen, vorausgesetzt, dass, wenn eines von o oder q 0 ist, das andere im Bereich von 1 bis 200 liegt; p für eine durchschnittliche Molzahl von zugegebenen Oxyalkylengruppen steht und im Bereich von 1 bis 50 liegt und die Gesamtzahl von o, p und q (o+p+q) im Bereich von 2 bis 300 liegt.

4. Zementzusatzmittel nach einem der Ansprüche 1 bis 3, wobei das Gewichtsverhältnis des Polymers auf Polycarbonsäurebasis (A) und des Polymers auf Polycarbonsäurebasis (B) [Gewichtsverhältnis von (A):(B)] im Bereich von 1:99 bis 90:10 liegt.

## Revendications

1. Adjuvant pour ciment comprenant deux ou plus de deux éléments parmi les polymères à base d'acide polycarboxylique, ledit adjuvant pour ciment comprenant au moins un polymère à base d'acide polycarboxylique (A) ayant un motif constitutif représenté par la formule (1) suivante : 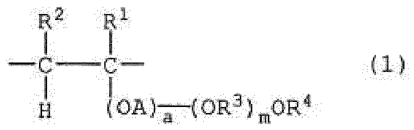 dans laquelle
R¹ et R² représentent chacun indépendamment un atome d'hydrogène, un groupe alkyle ayant 1 à 30 atomes de carbone, un groupe alcényle ayant 1 à 30 atomes de carbone, un groupe aryle ayant 6 à 12 atomes de carbone ;
A représente un groupe alkylène ayant 1 à 30 atomes de carbone ou un groupe arylène ayant 6 à 12 atomes de carbone ;
a vaut 0 ou 1 ;
OR³ représente un groupe oxyalkylène ayant 2 à 18 atomes de carbone, chaque OR³ pouvant être identique aux autres ou différent des autres, à condition que lorsque OR³ est sous une forme mélangée de deux ou plus de deux éléments, chaque OR³ puisse être ajouté sous une forme séquencée ou statistique;
R⁴ représente un atome d'hydrogène ou un groupe hydrocarboné ayant 1 à 30 atomes de carbone ; et
m représente un nombre moyen de moles de groupes oxyalkylène ajoutés et est dans la plage de 1 à 300 ; et
au moins un polymère à base d'acide polycarboxylique (B) ayant un motif constitutif représenté par la formule (2) suivante : 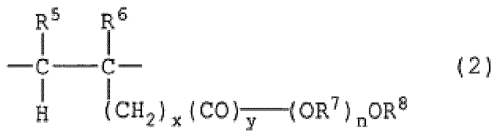 dans laquelle
R⁵ et R⁶ représentent chacun indépendamment un atome d'hydrogène ou un groupe méthyle ;
x représente un nombre entier dans la plage de 0 à 2 et y vaut 1 ;
OR⁷ représente un groupe oxyalkylène ayant 2 à 18 atomes de carbone, chaque OR⁷ pouvant être identique aux autres ou différent des autres, à condition que lorsque OR⁷ est sous une forme mélangée de deux ou plus de deux éléments, chaque OR⁷ puisse être ajouté sous une forme séquencée ou statistique;
R⁸ représente un atome d'hydrogène ou un groupe hydrocarboné ayant 1 à 30 atomes de carbone ; et
n représente un nombre moyen de moles de groupes oxyalkylène ajoutés et est dans la plage de 1 à 300 ;
le polymère (A) étant un copolymère d'un monomère (a) représenté par la formule (4) suivante : 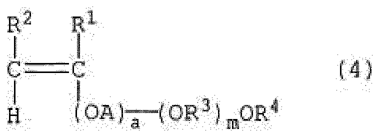 dans la formule (4), R¹, R², R³, R⁴, A, a et m étant tels que définis dans la formule (1), et d'un monomère (c), le monomère (c) étant choisi parmi un acide acrylique, un acide méthacrylique et un sel de métal monovalent, un sel de métal divalent, un sel d'ammonium et un sel d'amine organique de ceux-ci ;
le polymère (B) étant produit par copolymérisation d'un monomère (b) représenté par la formule (5) suivante : 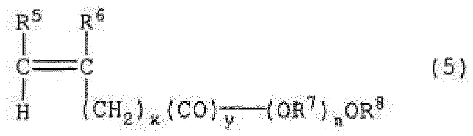 dans la formule (5), R⁵, R⁶, R⁷, R⁸, x, y et n étant tels que définis dans la formule (2), et d'un monomère (c), le monomère (c) étant choisi parmi un acide acrylique, un acide méthacrylique et un sel de métal monovalent, un sel de métal divalent, un sel d'ammonium et un sel d'amine organique de ceux-ci,
dans lequel
le monomère (c) pour la formation du polymère (A) et le monomère (c) pour la formation du polymère (B) sont identiques ou différents ; et
le rapport pondéral dudit polymère à base d'acide polycarboxylique (A) et dudit polymère à base d'acide polycarboxylique (B) [rapport pondéral de (A)/(B)] est dans la plage de 1/99 à 99/1.

2. Adjuvant pour ciment selon la revendication 1, dans lequel dans la formule (2), n est dans la plage de 1 à 10.

3. Adjuvant pour ciment selon la revendication 1 ou 2, dans lequel dans la formule (2), OR⁷ est représenté par la formule (3) suivante : 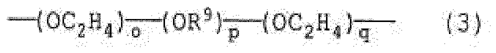 dans laquelle
R⁹ représente un groupe alkylène ayant 3 à 18 atomes de carbone ;
o et q représentent chacun indépendamment un nombre moyen de moles de groupes oxyalkylène ajoutés et sont chacun dans la plage de 0 à 200, à condition que lorsque l'un ou l'autre de o ou q vaut 0, l'autre soit dans la plage de 1 à 200 ;
p représente un nombre moyen de moles de groupes oxyalkylène ajoutés et est dans la plage de 1 à 50 ; et
le total des nombres o, p et q (o+p+q) est dans la plage de 2 à 300.

4. Adjuvant pour ciment selon l'une quelconque des revendications 1 à 3, dans lequel le rapport pondéral dudit polymère à base d'acide polycarboxylique (A) et dudit polymère à base d'acide polycarboxylique (B) [rapport pondéral de (A)/(B)] est dans la plage de 1/99 à 90/10.
